# EUROPÄISCHE PATENTANMELDUNG

(11) **EP 1 932 578 A1**
(43) Veröffentlichungstag der Anmeldung: **18.06.2008**
(21) Anmeldenummer: 07022787.1
(22) Anmeldetag: 23.11.2007
(51) Int. Cl.: B01D 46/34

(54) **Filtervorrichtung zur Reinigung partikelhaltiger Verbrennungsgase**

(30) Priorität: 15.12.2006 DE 102006059327
(71) Anmelder: Robert Bosch GmbH, 70442 Stuttgart (DE)
(72) Erfinder: Rothacher, Peter, 76646 Bruchsal (DE); Rückauf, Andreas, 71277 Rutesheim (DE)

(57) **Zusammenfassung**

Die vorliegende Erfindung stellt eine Vorrichtung zur Entfernung und Entsorgung von Partikeln aus Verbrennungsgasen bereit. Sie löst die Aufgabe, die Entfernung und Entsorgung von Partikeln aus Verbrennungsgasen aus einem Heizgerät hinsichtlich Partikelabscheidung und Brennwertausnutzung zu verbessern. Gekennzeichnet ist die erfindungsgemäße Vorrichtung dadurch, dass das Schüttgut, mit dem ein Gehäuse (3) der Filtervorrichtung (1) zur Reinigung von partikelhaltigen Verbrennungsgasen befüllt ist, brennbar ist und geeignet zur Adsorption von den Partikeln aus den Verbrennungsgasen und dass das Schüttgut mit den adsorbierten Partikeln zur Verbrennung in einem Heizkessel geeignet ist. Ferner ist die Filtervorrichtung (1) von einer Vorrichtung zur Energiegewinnung (2) umfasst, die einen Heizkessel aufweist, wobei Verbrennungsgase aus dem Heizkessel der Filtervorrichtung (1) zuführbar sind.

## Beschreibung

Die Erfindung betrifft eine Filtervorrichtung zur Entfernung und Entsorgung von Partikeln aus Verbrennungsgasen eines Heizgerätes.

Heizsysteme zur Verbrennung von organischen Substanzen wie Holzhackschnitzeln oder Pellets sind aus dem Stand der Technik bekannt. So beschreibt die EP 1 384 031 B1 einen Brenner zum Verbrennen von Feststoff, insbesondere von Pellets, der in die Wandöffnung eines Kessels eingebaut ist, wobei die Wandöffnung derart konstruiert ist, dass sie den Feuerraum zumindest teilweise umschließt. Dabei ist das Hauptaugenmerk im Wesentlichen auf die Verbindung von Brenner und Kessel gerichtet.

Derartige Heizvorrichtungen setzen partikelhaltige Verbrennungsgase frei, die, sofern sie nicht gereinigt werden, als Schadgase in die Atmosphäre gelangen. Dabei können gesetzlich vorgegebene Grenzwerte für diese Schadstoffemissionen überschritten werden. Andererseits sind unerwünschte Ablagerungen von Partikeln in den Abgaswegen von Heizgerätes zu beobachten, insbesondere wenn die Abgase auf relativ niedrige Temperaturen herunter gekühlt werden, um zum Beispiel auch die latent im Abgas enthaltene Wärme in Form von so genannter Brennwertnutzung noch für Heizzwecke zurück zu gewinnen. Bei der Verbrennung von festen Brennstoffen können Partikel mit Partikeldurchmessern von etwa 50 bis 200 nm emittiert werden, deren Entfernung aus dem Abgas durch Filtrationsverfahren, Abgaswäsche oder Elektroabscheider bekannt ist.

Die DD 289 474 A5 offenbart eine Anlage zur Reinigung von Rauchgas, wobei dem Rauchgasstrom Reagenzien zugesetzt werden, die nach Reaktion mit den Schadstoffen weitere Verbindungen bilden, die in einem Filter abgeschieden werden. Die mit der Schadstoffverbindung beaufschlagten Filter müssen entsorgt oder weiter verarbeitet werden. Um mit Schadstoffverbindungen beaufschlagte Filter zu reinigen, kann beispielsweise eine apparativ aufwändige Druckfilterabreinigung mechanisch erfolgen. Auch das Abreinigen des Filters durch Abbrennen ist bekannt, führt jedoch zu einer hohen Ascheproduktion, so dass die Entstehung der Asche zu einem weiteren Entsorgungsproblem führt. Zusätzlich ist bei Heizgeräten in diesem Zusammenhang zu beachten, dass Wartungsarbeiten zur Aufrechterhaltung des bestimmungsgemäßen Betriebs generell auf ein Minimum reduziert werden müssen, weil im Gegensatz zur industriellen Abgasreinigung die Heizgeräte in kleineren Gebäuden aufgestellt. Eingriffe in die Abgasanlage dürfen nur von Fachpersonal ausgeführt werden. Den Eigentümern bzw. Nutzern ist gegenüber dem üblichen Betrieb von Heizgeräten kein erhöhter Mehraufwand zum Betreiben einer Abgasreinigungsvorrichtung zuzumuten.

Der Erfindung liegt daher die Aufgabe zu Grunde, eine hinsichtlich Partikelabscheidung und Brennwertausnutzung verbesserte Vorrichtung zur Entfernung und Entsorgung von Partikeln aus Verbrennungsgasen aus Verbrennungsprozessen in Heizkesseln zu schaffen.

Diese Aufgabe wird durch erfindungsgemäße Vorrichtungen mit den Merkmalen der unabhängigen Patentansprüche gelöst. Vorteilhafte Weiterbildungen sind den Unteransprüchen zu entnehmen.

Ein Ausführungsbeispiel der erfindungsgemäßen Vorrichtung bezieht sich auf eine Ausführungsform einer Filtervorrichtung, mittels der partikelhaltige Verbrennungsgase aus in Heizkesseln ablaufenden Verbrennungsprozessen gereinigt werden können. Das Filtergehäuse dient dabei gleichzeitig als Vorratsbehälter und ist mit Schüttgut gefüllt, welches geeignet ist, die Partikel aus den Verbrennungsgasen adsorptiv anzulagern. Dadurch wird eine Reinigung des Verbrennungsgases erreicht. Ferner weist das Schüttgut selbst einen Brennwert auf, so dass es mitsamt den angelagerten Partikeln vorteilhaft wieder einem Verbrennungsprozess zugeführt werden kann. Das beladene Filtermaterial wird durch die weitere Verbrennung ökonomisch vorteilhaft entsorgt. Durch den laufenden Durchsatz im Vorratsbehälter erfolgt eine Art Selbstreinigung. Es kommt kaum zu bleibenden Ablagerungen und die Beladung des zu verbrennenden Schüttgutes mit adsorbierten Partikeln bleibt relativ gering.

Weitere Ausführungsbeispiele beziehen sich auf die Verwendung von Presskörpern, den Pellets, oder Spänen aus nachwachsenden Rohstoffen als brennbares Schüttgut für den Filter. Hiermit wird vorteilhaft verhindert, dass ein zu entsorgender Filterkuchen wie bei bekannten Filtervorrichtungen geschaffen wird, da das mit Partikeln aus dem Verbrennungsgas beladene Schüttgut bereits selbst ein Energieträger ist, der auf vorteilhaft kurzem Weg unmittelbar der weiteren thermischen Umsetzung zugeführt werden kann. Weitere Ausführungsbeispiele, auch die nachfolgende Beschreibung unter Bezug auf die Figuren, legen die vorteilhafte Ausgestaltung des Filters dar, der in einem System bzw. einer Vorrichtung zur Energiegewinnung zum Einsatz kommt.

Die Zeichnung stellt Ausführungsbeispiele der Erfindung dar. Es zeigt jeweils eine Vorrichtung zur Energiegewinnung mit einer Filtervorrichtung:
- Fig. 1: in einer ersten schematischen Darstellung und
- Fig. 2: in einer anderen Ausführungsform.

Die Ausführungsbeispiele der erfindungsgemäßen Filtervorrichtung zur Reinigung von partikelhaltigen Verbrennungsgasen beziehen sich grundsätzlich auf einen Filter, der ein mit einem Schüttgut befülltes Gehäuse aufweist, das durch entsprechende Schüttgutaustauschöffnungen in das Gehäuse gegeben oder daraus entfernt werden kann. Bei feststehenden Filtern können vorteilhaft zwei Öffnungen zum Austausch den Schüttguts vorgesehen sein. Eine erste Öffnung dient dabei zum Befüllen des Filters, während eine zweite Öffnung für die Entnahme des Schüttguts vorgesehen ist. Bei einem Filter, der gegebenenfalls um eine Horizontalachse dreh- oder kippbar gelagert ist, würde auch eine einzige Öffnung zum Einfüllen und Entnehmen des Schüttguts ausreichen. Dieses füllt das Gehäuse meist nur soweit, dass ein Kopfraum verbleibt, so dass das gereinigte Gas durch einen Auslass für Verbrennungsgase frei abströmen kann.

Das ungereinigte Verbrennungsgas, das Partikel von einer Größe zwischen 50 nm und 200 nm enthält, wird durch einen Einlass nahe dem Boden des Filters in das Gehäuse geführt, passiert das Schüttgut, wobei sich die Partikel adsorptiv an dem Schüttgut anlagern, und verlässt das Gehäuse durch den stromabwärts angeordneten Auslass. Eine geeignete Gehäusegeometrie ist ein Zylinder, der einen Kegelboden aufweisen kann.

Das Schüttgut der erfindungsgemäßen Vorrichtung ist brennbar, es kann nach seiner Beladung mit den Partikeln zur Entsorgung derselben einem weiteren Verbrennungsprozess in einem Heizkessel zugeführt werden. Besonders geeignet sind Schüttgutkörper, die durch Pressen nachwachsender Rohstoffe gefertigt werden. Diese so genannten Pellets können aus Holz oder holzhaltigen Produkten bestehen. Sie lassen sich in Größen fertigen, die geeignet sind, ein Schüttgut mit einem hohen Verhältnis von reaktionswirksamer Oberfläche zum Volumen zu schaffen. Dadurch wird insbesondere auf Grund der Oberflächenbeschaffenheit der Pellets eine gute Adsorptivität erzielt. Andererseits ist das Schüttgut stückig genug, um sich als Schüttung im laufenden Betrieb nicht zu stark zu verdichten. Damit ist sichergestellt, dass der Druckverlust im Abgasweg der erfindungsgemäßen Vorrichtung nicht zu groß wird und mit üblichen Gebläsen, entweder als Brenner- oder als Abgasgebläse ausgeführt, überwunden werden kann.

Während des Filtervorgangs wird das Schüttgut getrocknet, weil es dem Abgasstrom ausgesetzt ist. Auch können separat mit einem Gebläse Trocknungsgase zugeführt werden. Diese werden durch einen oder mehrere Einlässe im Gehäuse durch das Schüttgut geführt und strömen mit den Verbrennungsgasen durch den entsprechenden Auslass nach oben ab. So ist das Schüttgut, das gleichzeitig Brennmaterial und Filter ist, optimal für den weiteren Einsatz als Brenngut präpariert.

Der weitere Einsatz kann insbesondere in der erfindungsgemäßen Vorrichtung zur Energiegewinnung erfolgen, welche eine Kombination aus der erfindungsgemäßen Filtervorrichtung und einem Heizkessel wie beispielsweise einem Brennwertkessel ist. In dieser Vorrichtung wird das mit Partikeln beladene Schüttgut somit durch die weitere thermische Umsetzung direkt entsorgt. Der Heizkessel hat grundsätzlich einen Auslass für Verbrennungsgase, der mit dem Einlass für Verbrennungsgase der Filtervorrichtung durch eine Zuführleitung verbunden ist, um so die Verbrennungsgase aus dem Heizkessel der Filtervorrichtung zuzuführen. Ferner hat der Heizkessel eine Zuführöffnung für das aus dem Filter stammende Adsorbat, wobei eine Fördervorrichtung das Schüttgut in den Heizkessel überführt.

Grundsätzlich können ein- oder mehrstufige Vorrichtungen zur Kondensatabscheidung in den Weg zwischen Gasaustritt am Heizkessel und Gaseintritt an der Filtervorrichtung, also quasi in der Zuführleitung, angeordnet sein. In den Kondensaten gegebenenfalls auftretende schlamm- oder krustenartige Abscheidungen können durch entsprechende, dem Fachmann bekannte Vorrichtungen, wie rotierende Abstreifer oder in Längsrichtung des Kühlers des Kondensatabscheiders bewegte Abstreifer, von Aschen und Ruß getrennt werden, so dass die Verbrennungsgase vorgereinigt sind, ehe sie in die Filtervorrichtung gelangen.

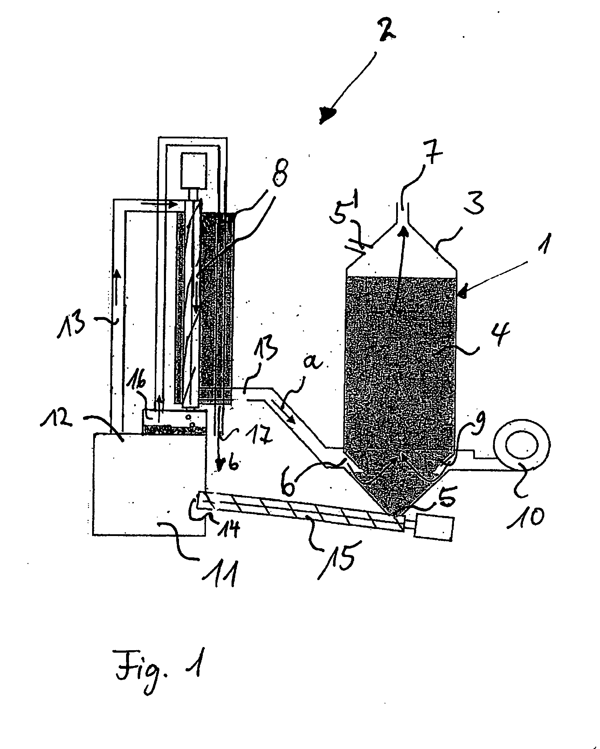

Fig. 1 zeigt eine solche Vorrichtung zur Energiegewinnung 2 mit einem als Brennwertkessel 11 ausgeführten Heizkessel und einer Filtervorrichtung 1. Der Brennwertkessel 11 hat einen Auslass 12, über den die Verbrennungsgase durch eine Zuführleitung 13 zunächst in einen zweistufigen Kondensatabscheider 8 gelangen. Der Kondensatabscheider 8 bewirkt eine Vorreinigung, indem kondensierbare Bestandteile auskondensiert werden. Abgetrennte schlammartige und krustige Substanzen werden in den Verdampfer 16 geführt und eingeengt, so dass ein ebenfalls trockenes Substrat zur Verbrennung im Verdampfer verbleibt. Das weitere gasförmige Gemisch gelangt aus dem Verdampfer in zweiter Stufe erneut in den Kondensatabscheider 8. Das in dem Kondensatabscheider 8 abkondensierte Wasser wird, wie durch den Pfeil b angezeigt, durch den Abfluss 17 abgeführt. Das nunmehr vorgereinigte Verbrennungsgas gelangt über die Weiterführung der Zuführleitung 13 in die Filtervorrichtung 1. Diese wird durch ein zylindrisches, sich umgekehrt trichterförmig verjüngendes Gehäuse 3 mit Kegelboden gebildet und ist mit Presskörpern 4 als Schütt- und Filtermaterial soweit gefüllt, dass lediglich der obere, sich verjüngende Bereich des Zylinders als Freiraum verbleibt.

Die Verbrennungsgase strömen entsprechend von dem Einlass 6 nahe dem Kegelboden des Gehäuses nach oben durch das Schüttgut in Richtung zu dem Auslass 7, welcher mit der üblichen Abgasleitung verbunden ist. Dabei adsorbieren die Partikel der Verbrennungsgase an dem Schüttgut, ehe die gereinigten Verbrennungsgase im oberen Bereich durch den Auslass 7 abgeführt werden. Ebenfalls nahe dem Kegelboden ist ein Einlass 9 für Trocknungsgase, die durch die Gebläsevorrichtung 10 bereit gestellt werden, angeordnet. Damit können die Presskörper 4 oder Späne bereits während des Adsorptionsprozesses getrocknet werden, was überaus vorteilhaft ist, wenn die direkte Zufuhr des beladenen Schüttguts, wie in Fig. 1 gezeigt, in einen Brennwertkessel 11 zur thermischen Weiterverwertung erfolgt:

Die Presskörper oder Späne mit den adsorbierten Partikeln werden durch die in dem Kugelboden angeordnete durch die Schüttgutentnahmeöffnung 5 aus der Filtervorrichtung 1 direkt in eine Förderschnecke entlassen, von der sie zum Brennwertkessel 11 transportiert und durch eine Zuführöffnung 14 in diesen überführt werden. Somit wird der in dem Brennwertkessel 11 ablaufende Verbrennungsprozess hinsichtlich der Reinigung und der Entsorgung des Brennmaterials optimiert, da dieses zunächst als Pellets und später die partikulären Verbrennungsrückstände so lange in den Prozess zurückgeführt werden, bis das Brennmaterial über annähernd keinen Brennwert mehr verfügt.

Selbstverständlich kann der Fachmann statt der Förderschnecke 15 eine andere Fördervorrichtung wählen, auch als Heizkessel können andere Ausgestaltungen als der Brennwertkessel in Frage kommen. Ebenfalls ist die zweistufige Kondensatabscheidung nur beispielhaft erwähnt. Grundsätzlich kann die Kondensatabscheidung beliebige Stufenzahlen haben oder die Vorrichtung kann sogar ohne Kondensatabscheidung ausgestattet sein.

Ferner können eine oder mehrere Fördervorrichtungen das mit Partikeln beladene Material aus der Filtervorrichtung in einen oder mehrere Heizkessel fördern, wobei der das Ausgangsgas produzierende Kessel nicht der Kessel sein muss, in dem das Adsorbat verbrannt wird.

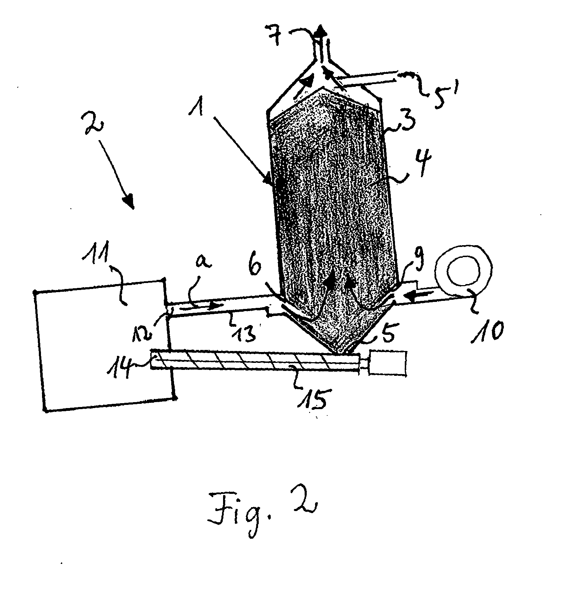

In Fig. 2 ist eine Vorrichtung zur Energiegewinnung 2 dargestellt, bei welcher der als Brennwertkessel 11 ausgeführten Heizkessel direkt mit der Filtervorrichtung 1 gekoppelt ist. Der Brennwertkessel 11 hat einen Auslass 12, über den die Verbrennungsgase durch eine Zuführleitung 13 unmittelbar in die Filtervorrichtung 1 zur Reinigung geführt werden, wobei die Filtervorrichtung 1 gleich der in Fig. 1 gezeigten ausgestaltet ist. Von der Zuführleitung 13 kommend strömen die Verbrennungsgase durch den Einlass 6 im Filtergehäuse 3 stromabwärts zu dem Auslass 7, wobei beim Passieren des Schüttgutes die Partikelabsorption erfolgt und eine Reinigung der Verbrennungsgase stattfindet. Das Schüttgut wird durch Trocknungsgase, die über den Einlass 9 in das Gehäuse 3 strömen, trocken gehalten. Andere Ausführungsbeispiele könnten auf eine Zufuhr von Trocknungsgasen auch verzichten.

Das Schüttgut wird, unabhängig vom Beladungszustand mit Partikeln, durch die Schüttgutentnahmeöffnung 5 aus der Filtervorrichtung 1 direkt in die Förderschnecke 15 entlassen, mittels welcher es durch eine Zuführöffnung 14 in den Brennwertkessel 11 gefördert und dort zur Gewinnung von Energie verbrannt wird. Die Filtervorrichtung 1 kann durch die Schüttguteinfüllöffnung 5' mit frischem Schüttgut, beispielsweise Presskörper aus organischen Rohstoffen, beaufschlagt werden. Anstelle einer Förderschnecke 15 könnte der Fachmann ebenfalls eine Zellradschleuse, ein Förderband, eine Schüttelrinne oder andere, ihm geläufige Fördermittel wählen.

## Patentansprüche

1. Filtervorrichtung (1) zur Reinigung von partikelhaltigen Verbrennungsgasen mit einem Gehäuse (3), mindestens einer teilweisen Schüttgutfüllung, mindestens einer Schüttgutaustauschöffnung (5, 5'), mindestens einem Einlass (6) für die Verbrennungsgase und mit wenigstens einem Auslass (7) für die Verbrennungsgase,
**dadurch gekennzeichnet, dass** das Schüttgut brennbar und geeignet zur Adsorption von Partikeln aus Verbrennungsgasen ist.

2. Filtervorrichtung (1) nach Anspruch 1,
**dadurch gekennzeichnet, dass** das brennbare Schüttgut aus nachwachsenden Rohstoffen, vorzugsweise aus Holz oder holzhaltigen Produkten besteht und zumindest teilweise die Form von Presskörpern (4) oder Spänen hat.

3. Filtervorrichtung (1) nach den Ansprüchen 1 oder 2,
**dadurch gekennzeichnet, dass** das Gehäuse (3) der Filtervorrichtung (1) zylindrisch, quadratisch oder rechteckig ist und/oder einen Kegelboden aufweist.

4. Filtervorrichtung (1) nach einem der Ansprüche 1 bis 3,
**dadurch gekennzeichnet, dass** das Gehäuse (3) wenigstens einen Einlass (9) für ein Trocknungsgas, welches zur Trocknung des Schüttguts geeignet ist, aufweist.

5. Filtervorrichtung (1) nach Anspruch 4,
**dadurch gekennzeichnet, dass** am oder im Einlass (9) für Trocknungsgase der Filtervorrichtung (1) eine Gebläsevorrichtung (10) zur Bereitstellung eines Trocknungsgases angeordnet ist.

6. Filtervorrichtung (1) nach einem der Ansprüche 1 bis 5,
**dadurch gekennzeichnet, dass** die Verbrennungsgase das Schüttgut durchströmen.

7. Filtervorrichtung (1) nach einem der Ansprüche 1 bis 6,
**dadurch gekennzeichnet, dass** der Einlass (6) der Verbrennungsgase stromaufwärts des Schüttguts und der Auslass (7) stromabwärts des Schüttguts angeordnet ist.

8. Vorrichtung zur Energiegewinnung (2), umfassend zumindest einen Heizkessel und eine Filtervorrichtung (1) nach einem der Ansprüche 1 bis 7,
**dadurch gekennzeichnet, dass** der Heizkessel zumindest einen Auslass (12) für Verbrennungsgase aufweist, der mit dem Einlass (6) für Verbrennungsgase der Filtervorrichtung (1) durch eine Zuführleitung (13) in Verbindung steht, so dass Verbrennungsgase aus dem Heizkessel der Filtervorrichtung (1) zuführbar sind.

9. Vorrichtung zur Energiegewinnung nach Anspruch 8,
**dadurch gekennzeichnet, dass** der Heizkessel eine Zuführöffnung (14) für brennbares Schüttgut aufweist, die mit der Schüttgutaustauschöffnung (5) der Filtervorrichtung (1) über eine Fördervorrichtung in Verbindung steht, so dass das mit den Partikeln beladene Schüttgut über die Fördervorrichtung in den Heizkessel überführbar ist.

10. Vorrichtung zur Energiegewinnung nach Anspruch 8 oder 9,
**dadurch gekennzeichnet, dass** ein Kondensatabscheider (8) in der Zuführleitung (13) zwischen dem Heizkessel und der Filtervorrichtung (1) angeordnet ist.

11. Vorrichtung zur Energiegewinnung nach einem der Ansprüche 8 bis 10,
**dadurch gekennzeichnet, dass** der Heizkessel ein Brennwertkessel (11) ist.
